# FASCICULE DE BREVET EUROPEEN

(11) **EP 1 177 414 B1**
(45) Date de publication et mention de la délivrance du brevet: **02.02.2005**
(21) Numéro de dépôt: 00925423.6
(22) Date de dépôt: 10.05.2000
(51) Int. Cl.: G01F 1/698

(54) **PERFECTIONNEMENTS AUX DEBITMETRES MASSIQUES DU TYPE A FIL RESISTIF**
VERBESSERUNGEN IN BEZUG AUF MASSENDURCHFLUSSMESSERN MIT WIDERSTANDSDRAHT
IMPROVEMENTS TO RESISTIVE WIRE MASS FLOW METERS

(30) Priorité: 11.05.1999 FR 9905986
(43) Date de publication de la demande: 06.02.2002
(73) Titulaire: AUXITROL SA, 18941 Bourges Cedex (FR)
(72) Inventeur: BERNARD, Marc, F-18400 Saint-Florent-sur-Cher (FR); BARRE, Cyril, F-18000 Bourges (FR)
(74) Mandataire: Callon de Lamarck, Jean-Robert
(86) Numéro de dépôt international: PCT/FR2000/001254
(87) Numéro de publication internationale: WO 2000/068650

(56) Documents cités:
- EP-A- 0 070 801
- EP-A- 0 210 509
- WO-A-89/01132
- FR-A- 2 680 872
- US-A- 4 501 145

## Description

La présente invention est relative aux débitmètres massiques du type à fil résistif.

Plus précisément, l'invention concerne notamment des débitmètres massiques destinés à être utilisés pour la mesure de flux de kérosène, par exemple dans des aéronefs.

La demanderesse a déjà proposé dans sa demande de brevet FR-2.728.071 un débitmètre à fil chaud apte à mesurer un débit massique.

Des impulsions de courant y sont envoyées sur le fil résistif pendant des périodes données et la vitesse de refroidissement du fil entre les impulsions est mesurée.

Le débitmètre comporte des moyens de traitement qui convertissent la vitesse de refroidissement ainsi mesurée et en déduisent le débit massique.

Pour un type de fluide donné, la vitesse de refroidissement est en effet directement fonction du débit massique.

Il existe toutefois de nombreux types de kérosènes susceptibles d'être utilisés indifféremment par un même aéronef.

Or, du fait de leur différence de viscosité, de leur différence de conductivité thermique ou encore de leur différence de masse volumique, ces différents types de kérosène présentent, en fonction du débit massique, des réponses de refroidissement qui ne sont pas identiques.

Un but de l'invention est de proposer un débitmètre massique qui soit susceptible d'effectuer des mesures de débit massique sur tout type de kérosène en s'adaptant de lui-même au type de kérosène qui circule dans le conduit sur lequel il réalise une mesure.

On connaît déjà par EP 210 509 un dispositif de mesure permettant de déterminer le débit massique d'un fluide et permettant également, de façon indépendante, de déterminer la composition du fluide, lorsque sa vitesse est connue.

Ce dispositif ne permet pas de résoudre le problème précité.

L'invention propose quant à elle un débitmètre massique du type comprenant au moins un fil résistif chauffant placé sur le trajet d'un fluide dont on souhaite mesurer le débit, des moyens pour appliquer audit fil des impulsions de courant de chauffage, des moyens de mesure pour déterminer sa vitesse de refroidissement entre lesdites impulsions et en déduire un débit massique, caractérisé en ce qu'il comporte deux tels fils résistifs qui s'étendent au niveau de deux zones de passages de fluide dont les sections desdits passages étant dans un rapport donné et en ce qu'il comporte des moyens de traitement aptes d'une part à déterminer des mesures de débits massiques pour chacun desdits deux fils et d'autre part à comparer le rapport des mesures obtenues avec l'un et l'autre des deux fils résistifs à un rapport théoriquement attendu fonction du rapport donné entre les sections de passage, les moyens de traitement étant aptes à déduire de cette comparaison ainsi que d'au moins l'une des vitesses de refroidissement mesurée d'une part le type de fluide circulant et d'autre part le débit massique du fluide.

Avantageusement, les zones de passage de fluide sont un corps creux dans lequel circule le fluide et une branche qui est une dérivation par rapport audit corps creux.

De façon préférentielle, le débitmètre massique comporte un corps profilé de type aile d'avion et en ce qu'une ouverture traverse ledit corps profité, un fil métallique de chauffage s'étendant dans la longueur de cette ouverture, la forme de ladite ouverture et l'incidence dudit corps profité dans le flux de fluide étant telles que la couche limite et le flux à mesurer pénètrent dans ladite ouverture de façon à éviter ou réduire les impacts de particules sur le fil.

L'invention trouve en particulier avantageusement application lorsque le fluide est du kérosène, les moyens de traitement étant aptes à déduire de la comparaison mise en oeuvre le type de kérosène circulant.

D'autres caractéristiques et avantages de l'invention ressortiront encore de la description qui suit

Cette description est purement illustrofive et non limitative. Elle doit être lue en regard des dessins annexés sur lesquels:
- la figure 1 est une représentation schématique en coupe d'un débitmètre conforme à un mode de réalisation de l'invention vue en coupe verticale axiale d'un débitmètre massique à fil chaud ;
- la figure 2 est une représentation schématique illustrant le montage d'un fil résistif ;
- la figure 3 est une vue en coupe transversal du montage de la figure 2,
- la figure 4 est une représentation schématique en perspective d'un corps de profité dans lequel le fil d'un débitmètre conforme à l'invention peut être reçu.

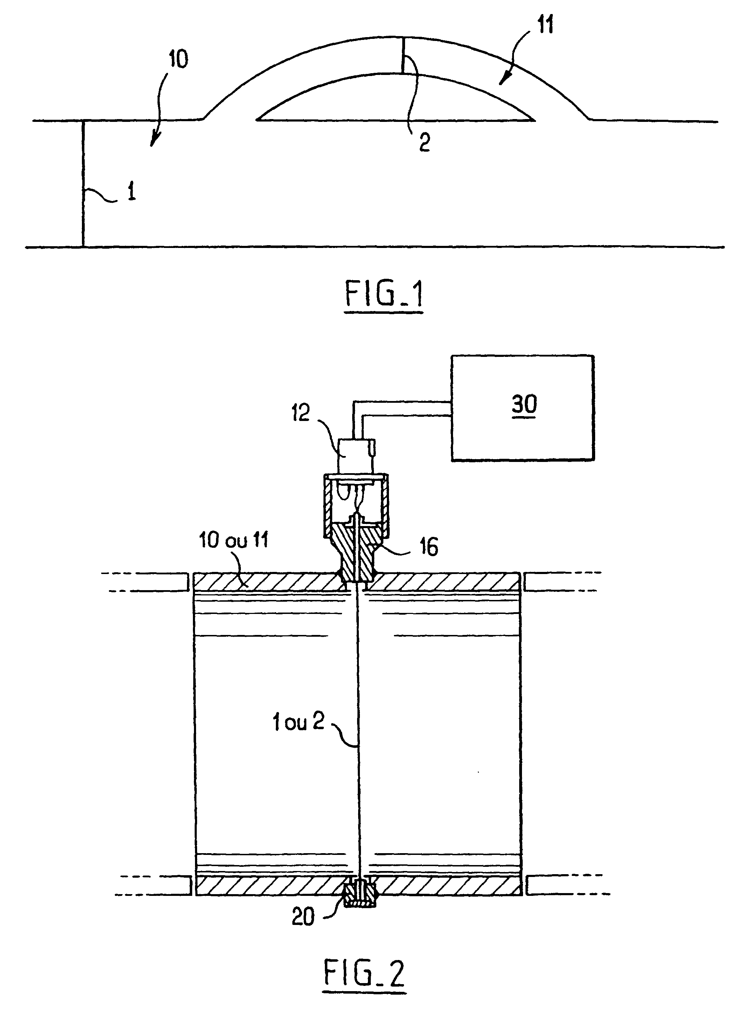

Le débitmètre massique qui est représenté sur la figure 1 comporte d'une part un corps creux principal 10 de forme générale cylindrique dans lequel circule le fluide dont on souhaite mesurer le débit massique et d'autre part une branche de dérivation 11 qui s'étend en parallèle à une portion dudit corps creux 10.

Il comporte également deux fils résistifs 1 et 2 qui s'étendent diamétralement l'un (fil 1) dans une portion du corps 10 en amont ou en aval de la dérivation 11, l'autre (fil 2) dans la dérivation 11 elle-même.

Le fil 1 est le fil principal de mesure.

Le fil 2 est un fil de référence.

Ces deux fils 1 et 2 sont reliés à une même unité de gestion 30 qui commande la génération d'impulsions de courant dans le fil 1 et le fil 2 et mesure la vitesse de refroidissement desdits fils 1 et 2 de la façon qui est décrite plus loin de façon détaillée.

L'unité de gestion 30 comporte également des moyens de mémorisation dans lesquels sont stockées des données lui permettant, pour chaque type de kérosène, de convertir la vitesse de refroidissement déterminée en une valeur de débit massique.

Or, les débits massiques mesurés dans le corps creux principal 10 au moyen du fil résistif 1 et dans la branche de dérivation 11 au moyen du fil résistif 2 doivent être dans un rapport donné, imposé par construction et notamment par le rapport des sections de passage dans le corps 10 et la branche 11.

L'unité de gestion 30 comporte des moyens de traitement qui lui permettent de déterminer, en fonction des vitesses de refroidissement mesurées pour le fil 1 et pour le fil 2, quel est le kérosène pour lequel les valeurs de débits massiques déterminées à partir des données de conversion précitées et correspondant à ces vitesses de refroidissement, sont effectivement dans le rapport attendu.

Ainsi, il est possible à tout moment pour l'unité de gestion 30 de déterminer quel est le type de kérosène (JET A également appelé JP8 ; JET B également appelé JP 4 ; JP1 ; JP3 ; JP5 ; etc.) qui circule dans le corps 10 et la branche de dérivation 11.

Cette détermination du type de kérosène peut par exemple être effectuée à intervalles réguliers par l'unité de gestion 30 au cours du vol d'un aéronef.

En variante, l'unité de gestion 30 peut vérifier à chaque mesure que les débits massiques déterminés à partir des vitesses de refroidissement du fil 1 et du fil 2 sont bien dans le rapport attendu et effectuer une nouvelle détermination du type de fluide circulant dans le corps 10 et la branche de dérivation 11 lorsque ce rapport n'est pas respecté.

Les montages des fils 1 et 2 et les traitements de mesure mis en oeuvre par l'unité de gestion 30 sont du type de celui décrit dans la demande de brevet FR-2.728.071 de la demanderesse, à laquelle on pourra avantageusement se référer.

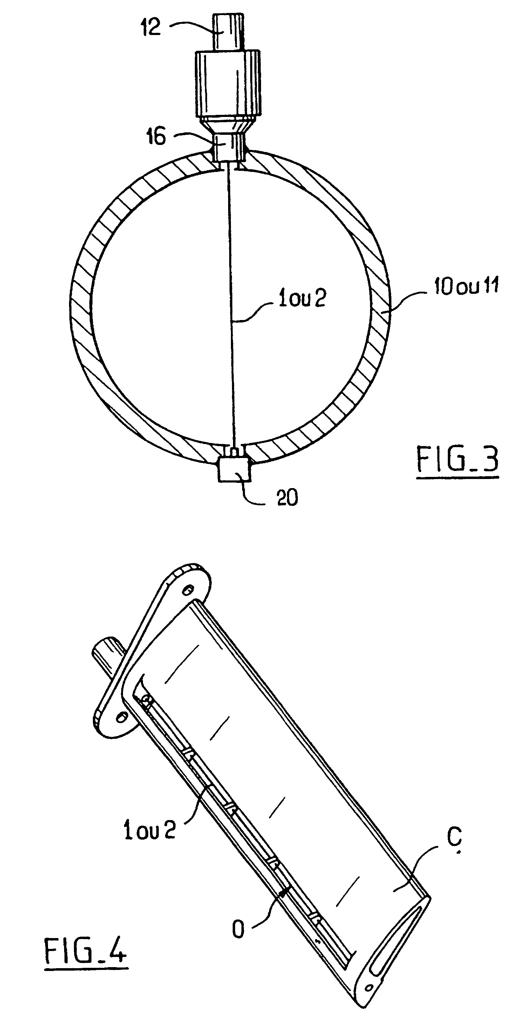

Il sont rappelés ci-dessous en référence aux figures 2 et 3.

Les fils résistifs 1 et 2 sont par exemple constitués par un conducteur résistif plié à 180° à son extrémité inférieure et s'étendant en double dans une gaine.

L'extrémité inférieure dudit fil 1 ou 2 est sertie dans une bague cylindrique 20 soudée dans un perçage du corps 10 ou de sa branche 11.

A son extrémité supérieure, le fil résistif traverse de façon électriquement isolante un alésage central d'une monture 16 fixée dans un autre perçage du corps 10 ou de la branche 11 par soudage, ledit fil 1 ou 2 étant fixé à ladite monture 16. Sur ladite monture est monté un connecteur 12 pour le raccordement dudit fil 12 à l'unité électronique de gestion 30.

En fonctionnement, on établit un chauffage du fil résistif 1 ou 2 en y appliquant des impulsions de courant bien déterminées et l'on étudie la pente de la courbe de refroidissement du fil lorsqu'entre les impulsions successives, seul un faible courant, non significatif, le traverse.

La connaissance de cette pente permet à l'unité de traitement 30 de calculer le débit massique du fluide, ladite pente étant en effet directement fonction dudit débit massique.

Le circuit électronique du débitmètre est conçu pour que l'unité de commande 30 puisse connaître à tout moment d'une part la tension U aux bornes du fil 1 ou 2, et d'autre part le courant I qui le traverse. On en déduit la valeur instantanée de sa résistance R = U/l, et donc la valeur instantanée de sa température, la résistance variant en fonction de la température selon une loi monotone que l'on connaît préalablement.

Grâce au fait que la mesure s'effectue par détermination d'une pente (mesure différentielle), le débitmètre ne nécessite aucune référence, contrairement à la majorité des systèmes antérieurement connus.

Ainsi, le débitmètre est insensible aux variations de température du fluide dont on souhaite mesurer le débit.

L'unité 30 comporte des moyens cadencés pour appliquer au fil des impulsions de courant, avec à chaque fois la même valeur constante de courant, selon un rapport cyclique bien déterminé. Elle comporte également des moyens capables, pendant chaque période séparant deux impulsions de courant successives, d'acquérir la température du fil par mesure de sa résistance. Pour pouvoir effectuer cette mesure, il est nécessaire de faire circuler un très faible courant constant dans le fil, la valeur de ce courant étant choisie de manière à ne pas influencer le comportement thermique du fil pendant son refroidissement. Par exemple, le courant est choisi de manière à dégager une puissance de quelques milliwatts, à comparer à quelques dizaines de watts pendant les impulsions de courant proprement dites. Ainsi la température du fil pendant son refroidissement est directement proportionnelle à la tension à ses bornes.

L'unité 30 comporte un circuit de dérivation de cette tension en fonction du temps. La dérivée ainsi obtenue est une fonction du débit massique et l'unité de traitement 30 comporte des moyens de conversion qui déterminent le débit massique en fonction de la dérivée de la tension. Par exemple, l'unité 30 comporte des moyens de mémorisation dans lesquels des tables de conversion sont stockées.

Selon un autre aspect avantageux de l'invention, les fils 1 et 2 du débitmètre peuvent être reçus dans un profilé du type de celui qui a été décrit dans la demande de brevet FR 91 10845 de la demanderesse, à laquelle on pourra avantageusement se référer.

Un tel corps profilé a été représenté sur la figure 4 sur laquelle il a été référencé par C. Il présente une forme de type aile d'avion qui peut être ou non symétrique.

Une ouverture O traverse ledit corps profilé C le fil métallique s'étendant dans la longueur de cette ouverture.

La forme de ladite ouverture O et l'incidence dudit corps profité C dans le flux de fluide étant telles que la couche limite et le flux à mesurer pénètrent dans ladite ouverture O de façon à éviter ou réduire les impacts de particules, de liquide ou solide dans le cas d'un fluide gazeux ; de solide dans le cas d'un fluide liquide.

Le débitmètre massique qui vient d'être décrit est particulièrement avantageux dans le cas de mesure sur du kérosène, en particulier dans le cas d'alimentation de moteur ou turbine d'aéronef.

L'invention pourrait néanmoins bien entendu trouver application pour d'autres types de fluides.

## Revendications

1. Débitmètre massique, du type comprenant au moins un fil résistif chauffant (1 ou 2) placé sur le trajet d'un fluide dont on souhaite mesurer le débit, des moyens (30) pour appliquer audit fil des impulsions de courant de chauffage, des moyens de mesure pour déterminer sa vitesse de refroidissement entre lesdites impulsions et en déduire un débit massique, **caractérisé en ce qu'**il comporte deux tels fils résistifs (1, 2) qui s'étendent au niveau de deux zones de passages de fluide dont les sections desdits passages étant dans un rapport donné et **en ce qu'**il comporte des moyens de traitement aptes d'une part à déterminer des mesures de débits massiques pour chacun desdits deux fils et d'autre part à comparer le rapport des mesures obtenues avec l'un et l'autre des deux fils résistifs à un rapport théoriquement attendu fonction du rapport donné entre les sections de passage. les moyens de traitement étant aptes à déduire de cette comparaison ainsi que d'au moins l'une des vitesses de refroidissement mesurée d'une part le type de fluide circulant et d'autre part le débit massique du fluide.

2. Débitmètre massique selon la revendication 1, **caractérisé en ce que** les zones de passage de fluide sont un corps creux dans lequel circule le fluide et une branche qui est une dérivation par rapport audit corps creux.

3. Débitmètre massique selon l'une des revendications précédentes, **caractérisé en ce qu'**il comporte un corps profilé (C) de type aile d'avion et **en ce qu'**une ouverture (O) traverse ledit corps profilé (C), un fil métallique de chauffage s'étendant dans la longueur de cette ouverture, la forme de ladite ouverture (O) et l'incidence dudit corps profilé (C) dans le flux de fluide étant telles que la couche limite et le flux à mesurer pénètrent dans ladite ouverture (O) de façon à éviter ou réduire les impacts de particules sur le fil.

4. Débitmètre massique selon l'une des revendications précédentes, **caractérisé en ce que** le fluide est du kérosène, les moyens de traitement étant aptes à déduire de la comparaison mise en oeuvre le type de kérosène circulant.

5. Débitmètre massique pour la mesure d'un débit massique de kérosène dans un aéronef, **caractérisé en ce qu'**il est constitué par un débitmètre selon l'une des revendications précédentes.

## Claims

1. Mass flow meter of the type comprising at least one heating resistive wire (1 or 2) placed in the path of a fluid whose flow is to be measured, means (30) for applying heating current pulses to said wire, measuring means for determining its cooling speed between said pulses and for deriving a mass flow from it, **characterized in that** it comprises two such resistive wires (1, 2) that extend in two fluid passage zones, the cross sections of said passages being in a given ratio, and **in that** it comprises processing means capable, on the one hand, of determining mass flow measurements for each of said two wires and, on the other hand, of comparing the ratio of the measurements obtained for each of the two resistive wires with a theoretically expected ratio dependent on the given ratio of the passage cross sections, the processing means being capable of deriving from this comparison and from at least one of the measured cooling speeds on the one hand the type of fluid flowing and on the other hand the mass flow of the fluid.

2. Mass flow meter according to Claim 1, **characterized in that** the fluid passage zones are a hollow body in which the fluid flows and a branch which is a diversion with respect to said hollow body.

3. Mass flow meter according to one of the preceding claims, **characterized in that** it comprises a profiled body (C) of the aircraft wing type and **in that** an opening (O) traverses said profiled body (C), a metal heating wire extending along the length of this opening, the shape of said opening (O) and the incidence of said profiled body (C) in the flow of fluid being such that the boundary layer and the flow to be measured penetrate into said opening (O) in such a way as to avoid or reduce the impacts of particles on the wire.

4. Mass flow meter according to one of the preceding claims, **characterized in that** the fluid is kerosene, the processing means being capable of deriving the type of kerosene flowing from the comparison used.

5. Mass flow meter for measuring the mass flow of kerosene in an aircraft, **characterized in that** it consists of a flow meter according to one of the preceding claims.

## Patentansprüche

1. Massendurchsatzmesser des Typs, umfassend wenigstens einen Widerstandsheizdraht (1 oder 2), welcher in dem Weg eines Fluids, von welchem man den Durchsatz zu messen wünscht, angeordnet ist, Mittel (30), um auf den Draht der Erwärmung dienende Stromstöße auszuüben, Messmittel, um dessen Abkühlungsgeschwindigkeit zwischen den Stößen zu bestimmen und daraus einen Massendurchsatz abzuleiten, **dadurch gekennzeichnet, dass** er zwei derartige Widerstandsdrähte (1, 2) umfasst, die sich auf der Ebene von zwei Fluiddurchlauf- oder -durchgangszonen erstrecken, bei welchem die Querschnitte der genannten Durchgänge in einem gegebenen Verhältnis stehen, und dadurch dass er Verarbeitungsmittel umfasst, welche geeignet sind, einerseits Messwerte von Massendurchsätzen für jeden der genannten zwei Drähte zu bestimmen und andererseits, das Verhältnis der mit dem einen und dem anderen der zwei Widerstandsdrähte erhaltenen Messwerte mit einem theoretisch erwarteten Verhältnis, welches von dem gegebenen Verhältnis zwischen den Durchgangsquerschnitten abhängt, zu vergleichen, wobei die Verarbeitungsmittel in der Lage sind, aus diesem Vergleich wie auch aus wenigstens einer der Geschwindigkeiten der gemessenen Abkühlung einerseits den Typ von zirkulierendem Fluid und andererseits den Massendurchsatz des Fluids abzuleiten.

2. Massendurchsatzmesser nach Anspruch 1, **dadurch gekennzeichnet, dass** die Fluiddurchlauf- oder -durchgangszonen ein Hohlkörper, in dem das Fluid zirkuliert, und eine Abzweigung, die eine Umgehungsleitung bezogen auf den Hohlkörper darstellt, sind.

3. Massendurchsatzmesser nach einem der vorangegangenen Ansprüche, **dadurch gekennzeichnet, dass** er einen stromlinienförmig hergestellten Körper (C) vom Typ einer Flugzeugtragfläche umfasst und dass eine Öffnung (O) den stromlinienförmig hergestellten Körper (C) durchquert, wobei ein metallischer Heizdraht sich in der Länge dieser Öffnung erstreckt, wobei die Form der Öffnung (O) und der Anstellwinkel des stromlinienförmig hergestellten Körpers (C) in dem Fluidstrom derart sind, dass die Randschicht und der zu messende Strom in die Öffnung (O) derart eindringen, dass die Aufschläge von Teilchen auf den Draht vermieden oder verringert werden.

4. Massendurchsatzmesser nach einem der vorangegangenen Ansprüche, **dadurch gekennzeichnet, dass** das Fluid Kerosin ist, wobei die Verarbeitungsmittel geeignet sind, aus dem ausgeführten Vergleich den Typ des zirkulierenden Kerosins abzuleiten.

5. Massendurchsatzmesser für die Messung eines Massendurchsatzes von Kerosin in einem Luftfahrzeug, **dadurch gekennzeichnet, dass** er aus einem Durchsatzmesser nach einem der vorangegangenen Ansprüche gebildet wird.
